# FASCICULE DE BREVET EUROPEEN

(11) **EP 1 267 087 B1**
(45) Date de publication et mention de la délivrance du brevet: **26.10.2005**
(21) Numéro de dépôt: 02291327.1
(22) Date de dépôt: 30.05.2002
(51) Int. Cl.: F16B 15/00, B25C 1/00

(54) **Embase de fixation d'une pièce à un support, dispositif l'incorporant et méthode de fixation**
Grundplatte zum Befestigen eines Teils auf einer Unterlage, Anordnung mit einer solchen Grundplatte und Befestigungsverfahren
Base plate for fixing an element to a support, device incorporating same and fixing method

(30) Priorité: 14.06.2001 FR 0107792
(43) Date de publication de la demande: 18.12.2002
(73) Titulaire: SOCIETE DE PROSPECTION ET D'INVENTIONS TECHNIQUES SPIT, 26501 Bourg-Les-Valence Cédex (FR)
(72) Inventeur: Almeras, Roland, 07300 Tournon (FR)
(74) Mandataire: Bloch, Gérard

(56) Documents cités:
- EP-A- 0 702 159
- WO-A-85/03560
- DE-A- 1 930 490
- DE-C- 4 327 436
- FR-A- 2 800 813
- US-A- 4 299 021
- PATENT ABSTRACTS OF JAPAN vol. 001, no. 046 (M-018), 6 mai 1977 (1977-05-06) & JP 52 001363 A (NAKAYAMA MICHIHARU), 7 janvier 1977 (1977-01-07)

## Description

La présente invention se rapporte au domaine de la fixation de pièces sur un support au moyen d'agrafes ou de clous. En particulier l'objet de l'invention est destiné à la fixation sur un support léger, offrant une faible résistance mécanique, tel qu'une plaque de plâtre entre deux feuilles cartonnées mais aussi à la fixation sur un support compact, très dur tel que le béton.

On sait fixer des pièces, par exemple une goulotte de guidage de fils électriques, sur un support en plâtre. On utilise dans ce but, une embase qui sert de cale et qui permet d'immobiliser la pièce contre le support. On fixe l'embase sur le support au moyen d'une agrafe. On peut utiliser à cet effet un outil automatique qui propulse l'agrafe dans le support au moyen d'un piston entraîné par un gaz comprimé.

Une agrafe convenant à cet usage est décrite dans la demande de brevet FR 9915964, publiée sous le numéro FR 2802585, qui a été déposée par la Demanderesse. L'agrafe comporte une tête de liaison transversale et deux branches flexibles, perpendiculaires à la tête. Les branches de l'agrafe présentent la particularité d'être coudées de façon à définir entre elles un X avec une partie convergente et une partie d'extrémité divergente. Cette forme permet d'augmenter l'angle de divergence, au moment de l'enfoncement de l'agrafe. On assure ainsi un meilleur ancrage de l'agrafe.

On connaît également un « clip » de fixation de câbles ou tuyaux à une plaque de plâtre formant une embase avec deux rampes de guidage des jambes d'une agrafe et décrit dans la demande de brevet WO 8503560. Les deux rampes sont divergentes.

On constate toutefois que, parfois, l'embase est rendue fragile par le choc qu'elle reçoit au moment du lancer de l'agrafe par l'outil de pose automatique. Un moyen permettant d'éviter cet affaiblissement de l'embase est souhaitable.

La présente invention a donc pour objectif une embase comprenant un moyen assurant le déplacement de l'agrafe tout en absorbant l'excès d'énergie.

La présente invention a également pour objectif d'améliorer l'ancrage de l'embase contre son support lorsqu'on utilise une agrafe, et en particulier l'agrafe telle que décrite dans la demande de brevet FR 9915964.

L'embase conforme à l'invention est caractérisée par le fait qu'elle comporte à l'entrée des deux rampes divergentes de guidage de l'agrafe, un élément faisant saillie par rapport au fond de la cuvette de réception de la tête d'agrafe, susceptible de se déformer sous la pression exercée par l'agrafe lorsque celle-ci est lancée par un outil de pose automatique, constituant un amortisseur de fin de course de l'agrafe et disposé entre les deux rampes.

Les rampes de guidage sont divergentes par rapport au sens de déplacement de l'agrafe.

En particulier ledit élément a une forme externe cylindrique et est placé entre les deux rampes de guidage de l'agrafe. Cet élément qui est en saillie par rapport au plan de l'embase, est réalisé dans un matériau susceptible de se déformer lorsque l'agrafe vient en fin de course. La déformation de cette partie, en absorbant l'excès d'énergie cinétique, réduit ainsi le risque de fissuration de l'embase.

Conformément à une autre caractéristique, ledit élément forme un canal de guidage pour un clou, placé entre les dites deux rampes divergentes.

Ainsi la présente invention permet la fixation indifféremment par clou ou par agrafe.

En effet, il est connu aussi de fixer des pièces sur un support en béton. On utilise en général dans ce but une embase associée à un tampon ou clou car l'agrafe se déformerait sans pénétrer le béton.

Une embase permettant la fixation d'une pièce à un support de type béton est décrite dans la demande de brevet FR 9914131, publiée sous le numéro FR 2800813, qui a été déposée au nom de la Demanderesse. Cette embase comprend notamment un passage de tampon de fixation formant une cheminée de guidage et d'amortissement.

Quand on doit, sur les chantiers, fixer une goulotte d'électricien, on est amené à rencontrer des supports en plâtre ou en matériau équivalent, mais aussi des supports très durs de type béton. Cela oblige le technicien à disposer de différents types de dispositifs de fixation de sa goulotte. Le dispositif de fixation conforme à l'invention permet de s'adapter au support en présence, avec le minimum de manipulations.

Il permet également de disposer d'un minimum de pièces différentes sur le chantier avec un avantage évident d'efficacité et de coût.

L'invention présente l'avantage à l'utilisateur de disposer d'une seule embase pour tous les types de support, facilitant ainsi la fabrication des dispositifs de fixation et les rendant plus économiques à produire. Elle simplifie également les manipulations du technicien sur le chantier ce qui est toujours souhaitable.

Conformément à une autre caractéristique, l'embase comporte un moyen de guidage de l'extrémité d'un guide-clou ou d'un guide-agrafe. En particulier, ce guide prend la forme d'une collerette. La collerette assure le maintien en place du guide-clou ou du guide-agrafe par la surface extérieure de celui-ci.

La présente invention a également pour objet un dispositif de fixation prêt à l'usage incorporant ladite embase. Il est caractérisé par le fait qu'il comprend également une agrafe dont les branches sont coudées et dont l'extrémité de ces dernières est engagée à l'entrée des dites deux rampes de guidage.

Conformément à une autre caractéristique, le dispositif comprend un clou engagé dans le canal de guidage de clou.

La présente invention a également pour objet une méthode de fixation d'un pièce sur un support.

Cette méthode est caractérisée par le fait que l'on utilise un guide permettant indifféremment le guidage d'un clou ou d'une agrafe. Le guide à utiliser comprend un canal central de guidage de clou et deux rainures internes le long du canal susceptibles de recevoir une agrafe ladite méthode consistant à monter le guide sur un outil automatique, glisser l'agrafe dans les rainures du guide jusqu à ce que celui-ci vienne s'engager à l'intérieur de la collerette puis buter contre le fond de l'espace ménagé par la collerette, appuyer l'embase contre le support et propulser l'agrafe contre le support. Ainsi le technicien a simplement à charger son appareil avec le clou ou l'agrafe sans avoir à changer de guide.

La méthode de l'invention présente ainsi l'avantage de réduire considérablement les manipulations du technicien sur le chantier.

D'autres caractéristiques et avantages apparaîtront à la lecture de la description qui suit d'un mode de réalisation préféré de l'embase en référence aux dessins annexés.
La figure 1 représente, en coupe selon I-I de la figure 2, l'embase de l'invention.
La figure 2 représente une vue de dessus de l'embase de la figure 1.
La figure 3 montre le dispositif comportant l'embase et une agrafe en place avant utilisation.
La figure 4 montre le dispositif ancré dans le support.
La figure 5 montre de manière schématique et en coupe un guide pouvant recevoir un clou ou une agrafe.

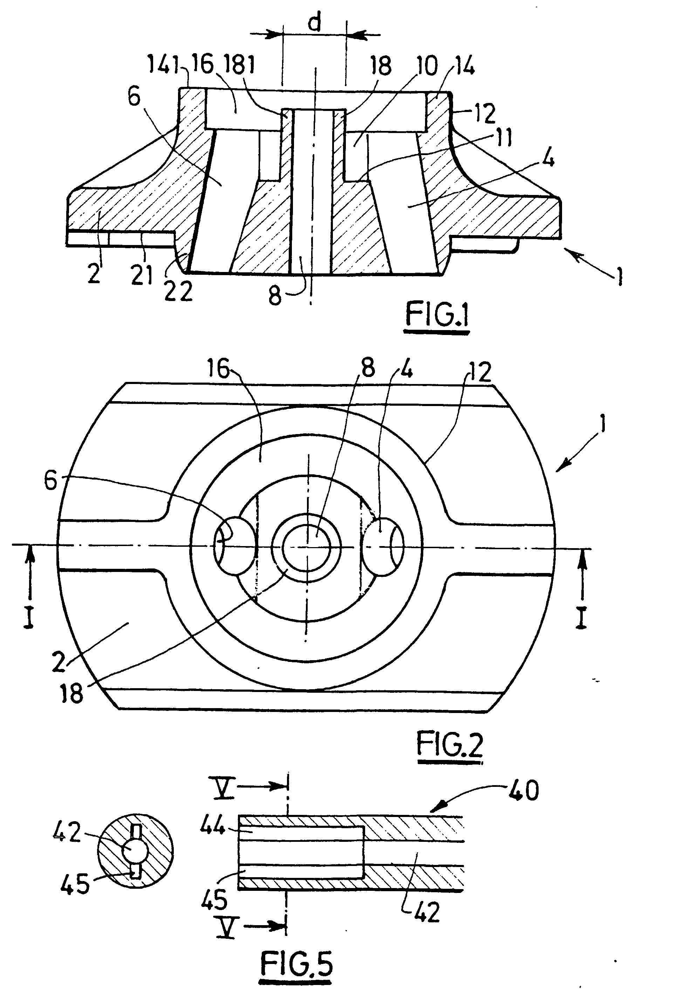

L'embase 1, représentée sur les figures 1 et 2, est en matériau plastique tel que le polypropylène. Elle comprend un plateau 2 de forme adaptée à sa destination. Sur l'exemple représenté, il est sensiblement rectangulaire avec deux côtés en arc de cercle. Le plateau est plus épais dans sa partie centrale qui est percée de deux canaux ou rampes 4 et 6 dont les directions sont divergentes par rapport à la vue de dessus. L'embase qui est représentée peut être utilisée indifféremment avec un clou central ou bien une agrafe. On observe qu'elle est traversée également par un canal 8 central perpendiculaire au plan du plateau. Une cuvette de forme circulaire 10 est centrée sur le canal 8. Elle forme une intersection avec chacune des rampes 4 et 6 et son fond est sensiblement dans le plan du plateau 2. La paroi 12 de la cuvette 10 est rehaussée d'une collerette annulaire 14 ménageant une espace dont le fond 16 est perpendiculaire à l'axe du canal 8. Les rampes 4 et 6 débouchent dans le fond 16.

Le canal 8 se prolonge par un élément 18 qui est en saillie par rapport au fond 11 de la cuvette. Dans le mode de réalisation représenté, cet élément 18 est en forme de cheminée. Le sommet 181 de la cheminée est légèrement en retrait par rapport au bord libre 141 de la collerette. Il dépasse toutefois le plan 16. Le plan 181 est entre le plan 16 et le plan 141. L'élément 18 est cylindrique et sa paroi est relativement mince. Son diamètre externe d est inférieur à la distance séparant les axes des deux rampes au niveau du plan 16 et aussi du plan 11.

Sur la partie inférieure, côté sortie de l'agrafe ou du clou l'embase comprend un bossage 22 par rapport au plan 21 d'appui sur la pièce. Ce bossage 21 doit venir se loger dans une ouverture pratiquée dans la pièce à immobiliser. Il sert à la fois à centrer l'embase par rapport à la pièce avant fixation et à caler la pièce et à l'immobiliser lorsque l'embase est scellée.

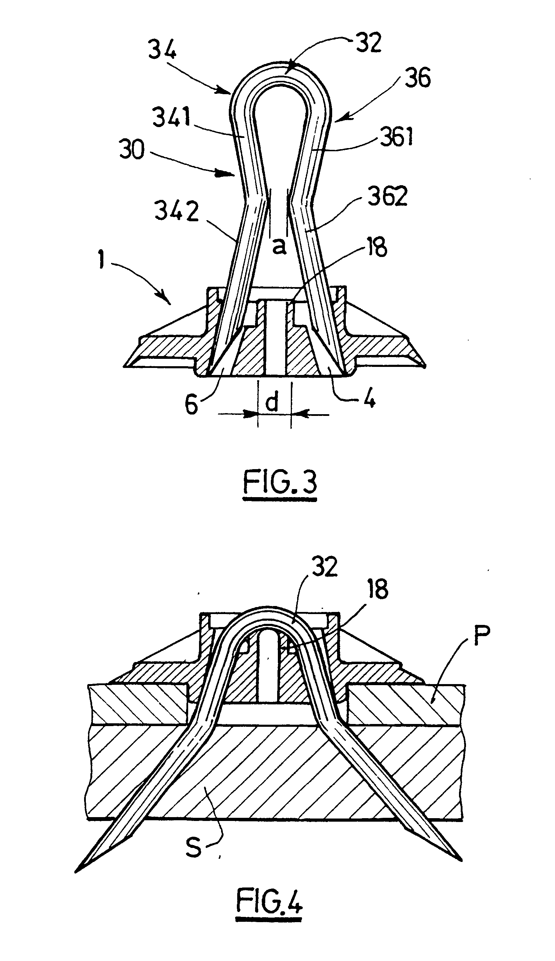

La figure 3 montre l'embase 1 équipée d'une agrafe 30. Cette agrafe est décrite dans la demande de brevet FR 9915964 au nom de la demanderesse. Elle comprend une tête de liaison transversale 32 et deux branches 34 et 36 dans une direction perpendiculaire à la tête. Les deux branches forment un X. Elles comprennent deux parties, 341, 342 et 361, 362 respectivement. Les parties 341 et 361 convergent. Les parties 342 et 362 divergent. On a ainsi une partie étroite entre les deux branches. Lorsque l'agrafe est en position, comme cela est représenté sur la figure 3, la plus petite distance (a) entre les deux branches est inférieure au diamètre extérieur (d) à l'entrée de la cheminée 18. Les extrémités 342 et 362 des branches sont engagées partiellement dans les rampes 4 et 6. L'agrafe est sous tension et est soumise à des contraintes internes tendant à écarter les deux branches. Il s'ensuit que les extrémités déjà engagées appuient sur les parties des parois des rampes 4 et 6 qui sont éloignées de l'axe de l'embase. Ainsi au niveau du sommet 181, les branches ne touchent pas la cheminée 18.

On n'a pas représenté de dispositif de fixation avec une embase dans laquelle on a engagé un clou mais l'invention le comprend également. Dans ce cas, le clou est partiellement engagé dans le canal 8.

La figure 4 montre l'agrafe qui a pénétré dans le support (S). Elle maintient l'embase en appui contre la pièce (P) qui est immobilisée contre le support (S). On observe que le bossage 22 est engagé dans une ouverture de la pièce (P) et assure son calage. La tête 32 de l'agrafe enserre la cheminée 18 qui a rempli son rôle d'amortisseur de fin de course, en se déformant.

La figure 5 montre de manière schématique l'extrémité d'un guide-clou/agrafe 40. Ce guide est monté sur un outil automatique non représenté, et connu en soi. Ce guide 40 comprend un alésage central 42 dans lequel on peut introduire le clou que l'on veut utiliser. Le long de cet alésage, on a creusé deux rainures rectilignes ces deux rainures 44 et 45 constituent un logement pour une agrafe.

La méthode de mise en place d'une pièce (P) sur un support consiste à choisir un dispositif de fixation pré-monté, embase avec agrafe ou embase avec clou en fonction du support. En supposant que le support est en plâtre, on choisit le dispositif montré à la figure 3. On glisse l'agrafe dans les rainures 44-45 du guide jusqu'à ce que celui-ci vienne s'engager à l'intérieur de la collerette puis buter contre le plan 16 de l'embase. On place l'embase avec le bossage 22 dans l'orifice de la pièce (P) et on maintient le tout appuyé contre le support (S). Lorsque l'agrafe est propulsée contre le support par le piston de l'outil, ses branches s'écartent en étant guidées dans leur mouvement par les deux rampes 4, 6. La hauteur de la cheminée est suffisante pour qu'à un moment de sa progression, les branches de l'agrafe viennent en toucher le bord externe. La largeur de la cheminée étant supérieure à l'espace libre entre les branches, celle-ci va accentuer l'effort de fléchissement exercé sur les branches. Les branches vont s'écarter davantage assurant ainsi un ancrage amélioré de l'embase sur le support.

En fin de course la tête vient s'appuyer contre l'élément cheminée qui va fléchir et fluer si l'énergie de l'agrafe est assez forte. En se déformant l'élément absorbe l'énergie et freine l'agrafe. Comme on le voit sur la figure 4, la cheminée s'est déformée pour absorber le choc produit par l'impact de l'agrafe.

Si le technicien juge qu'il faut un dispositif avec clou, il lui suffit de placer un tel dispositif dans le guide par le clou. La tête du clou viendra percuter la cheminée qui, en se déformant, absorbera l'énergie de la même façon.

L'invention comprend également le mode de réalisation où l'embase ne peut être associée qu'à une agrafe. Dans ce cas, le canal pour le clou peut être omis, l'élément 18 n'est alors pas creux. Il peut être plein au moins en partie. Ce mode de réalisation n'est pas représenté.

## Revendications

1. Embase de fixation d'une pièce à un support, comportant deux rampes (4, 6) de guidage des branches d'une agrafe (30), les branches étant reliées par une tête, l'embase formant une cuvette (10) de réception de la tête de l'agrafe (30), embase **caractérisée par le fait qu'**elle comporte un élément (18), faisant saillie par rapport au fond (11) de 1a cuvette (10), susceptible de se déformer de manière à constituer un amortisseur de fin de course de ladite agrafe (30) et disposé entre les deux rampes.

2. Embase de fixation selon la revendication 1, **caractérisée par le fait qu'**il est ménagé dans l'élément amortisseur (18) un canal (8) de guidage de clou.

3. Embase de fixation selon l'une des revendications 1 et 2, **caractérisée par le fait que** l'élément (18) a une forme externe cylindrique.

4. Embase selon l'une des revendications 1 à 3, **caractérisée par le fait qu'**elle comprend un élément (22) de centrage et de blocage de pièce par rapport à une ouverture ménagée dans la pièce à immobiliser.

5. Embase de fixation selon l'une des revendications 1 à 4, **caractérisée par le fait qu'**elle comprend un moyen de guidage de l'extrémité d'un guide-pointe (40) ou guide-agrafe.

6. Embase selon la revendication 5, **caractérisée par le fait que** ledit moyen de guidage forme une collerette (14).

7. Embase selon la revendication 6, **caractérisée par le fait que** l'élément (18) fait saillie au niveau de la collerette (14).

8. Dispositif de fixation d'une pièce sur un support, comportant une embase conforme à l'une des revendications 1 à 7, **caractérisé par le fait qu'**il comprend également une agrafe (30) dont les branches sont coudées et dont l'extrémité est engagée à l'entrée des dites deux rampes (4, 6) de guidage.

9. Dispositif de fixation selon la revendication 8, dont l'agrafe comporte deux parties convergentes (341, 361) et deux parties divergentes (342, 362), présentant une partie étroite de plus petite distance entre les deux branches (34, 36), **caractérisée par le fait que** le diamètre externe du bord externe de l'élément (18) d'embase, que les branches (34, 36) de l'agrafe sont destinées à venir toucher au cours de leur progression, est supérieur à la plus petite distance entre les deux branches (34, 36) de l'agrafe (30) de manière à forcer l'écartement des branches de l'agrafe (30) lorsque celle-ci est en déplacement vers le support de l'embase.

10. Dispositif de fixation d'une pièce sur un support, comportant une embase conforme à la revendication 2 et éventuellement l'une des revendications 3 à 7, **caractérisé par le fait qu'**il comprend également un clou engagé dans le dit canal (8).

11. Méthode de fixation d'une pièce sur un support au moyen d'un dispositif de fixation selon l'une des revendications 8 à 10, dont l'embase comporte les caractéristiques de la revendication 6, sa collerette (14) ménageant/6 un espace avec un fond (16), la méthode utilisant un appareil de pose automatique muni d'un guide (40) pour un tampon ou une agrafe, le guide (40) comportant un canal central (42) permettant le guidage d'un clou et deux rainures (44, 45) internes le long du canal (42) permettant de recevoir et de guider une agrafe, dans laquelle méthode on monte le guide (40) sur un outil automatique, on glisse l'agrafe (30) dans les rainures (44, 45) du guide (40), jusqu'à ce que celui-ci vienne s'engager à l'intérieur de la collerette puis buter contre le fond (16) de l'espace ménagé par la collerette (14), on appuie l'embase contre le support et on propulse l'agrafe (30) contre le support.

## Patentansprüche

1. Grundplatte zum Befestigen eines Teils auf einer Unterlage, umfassend mindestens zwei Rampen (4, 6) zum Führen der Arme einer Klammer (30), wobei die Arme durch einen Kopf verbunden sind, wobei die Grundplatte eine Wanne (10) zur Aufnahme des Kopfes der Klammer (30) bildet, wobei die Grundplatte **dadurch gekennzeichnet ist, dass** sie ein Element (18) umfasst, das in Bezug auf den Boden (11) der Wanne (10) heraussteht und sich so verformen kann, dass es einen Dämpfer für das Ende des Bewegungsverlaufes der Klammer (30) bildet und zwischen den zwei Rampen angeordnet ist.

2. Grundplatte zum Befestigen nach Anspruch 1, **dadurch gekennzeichnet, dass** in dem Dämpfungselement (18) ein Kanal (8) zum Führen eines Nagels eingerichtet ist.

3. Grundplatte zum Befestigen nach einem der Ansprüche 1 und 2, **dadurch gekennzeichnet, dass** das Element (18) eine äußere zylindrische Form hat.

4. Grundplatte nach einem der Ansprüche 1 bis 3, **dadurch gekennzeichnet, dass** sie ein Element (22) zum Zentrieren und Blockieren eines Teils in Bezug auf eine Öffnung umfasst, die in dem stillzustellenden Teil eingerichtet ist.

5. Grundplatte zum Befestigen nach einem der Ansprüche 1 bis 4, **dadurch gekennzeichnet, dass** sie ein Mittel zum Führen des Endes einer Stiftführung (40) oder Klammerführung umfasst.

6. Grundplatte nach Anspruch 5, **dadurch gekennzeichnet, dass** das Mittel zum Führen einen Kragen (14) bildet.

7. Grundplatte nach Anspruch 6, **dadurch gekennzeichnet, dass** das Element (18) auf der Ebene des Kragens (14) heraussteht.

8. Vorrichtung zum Befestigen eines Teils auf einer Unterlage, die eine Grundplatte gemäß einem der Ansprüche 1 bis 7 umfasst, **dadurch gekennzeichnet, dass** sie auch eine Klammer (30) umfasst, deren Arme abgewinkelt sind, und deren Ende in den Eingang der zwei Führungsrampen (4, 6) eingeführt ist.

9. Vorrichtung zum Befestigen nach Anspruch 8, deren Klammer zwei konvergierende Teile (341, 361) und zwei divergierende Teile (342, 362) umfasst, die einen engen Teil mit kleinerer Entfernung zwischen den zwei Armen (34, 36) aufweisen, **dadurch gekennzeichnet, dass** der Außendurchmesser des äußeren Rands des Elements (18) der Grundplatte, den die Arme (34, 36) der Klammer im Laufe ihres Fortbewegens berühren sollen, größer als die kleinere Entfernung zwischen den zwei Armen (34, 36) der Klammer (30) ist, so dass das Aufspreizen der Arme der Klammer (30) erzwungen wird, wenn sich diese zu der Unterlage der Grundplatte bewegt.

10. Vorrichtung zum Befestigen eines Teils auf einer Unterlage, die eine Grundplatte gemäß Anspruch 2 und eventuell gemäß einem der Ansprüche 3 bis 7 umfasst, **dadurch gekennzeichnet, dass** sie ferner einen Nagel umfasst, der in den Kanal (8) eingeführt ist.

11. Verfahren zum Befestigen eines Teils auf einer Unterlage mittels einer Befestigungsvorrichtung nach einem der Ansprüche 8 bis 10, deren Grundplatte die Merkmale des Anspruchs 6 umfasst, wobei ihr Kragen (14) einen Raum mit einem Boden (16) einrichtet, wobei das Verfahren ein automatisches Setzgerät zum Anbringen verwendet, das mit einer Führung (40) für einen Dorn oder eine Klammer versehen ist, wobei die Führung (40) einen zentralen Kanal (42) umfasst, der das Führen eines Nagels erlaubt, und zwei innere Rillen (44, 45), entlang des Kanals (42), die es erlauben, eine Klammer aufzunehmen und zu führen, wobei man bei dem Verfahren die Führung (40) auf ein automatisches Werkzeug montiert, man die Klammer (30) in die Rillen (44, 45) der Führung (40) einführt, bis sich die Führung in das Innere des Kragens einfügt und gegen den Boden (16) des Raums stößt, der durch den Kragen (14) eingerichtet ist, man die Grundplatte gegen die Unterlage drückt und die Klammer (30) gegen die Unterlage treibt.

## Claims

1. Base plate for fixing a work onto a support, comprising two ramps (4, 6) for guiding arms of a staple (30), the arms being connected through a head, the base plate forming a bowl (10) to receive the head of the staple (30), this base plate being **characterised by** the fact that it comprises an element (18) projecting from the bottom (11) of the bowl (10) that can deform so as to constitute a limit stop shock absorber for the said staple (30), and disposed between the two ramps.

2. Fixing base plate according to claim 1, **characterised by** the fact that a channel (8) is formed in the shock absorber element (18) to guide the nail.

3. Fixing base plate according to one of claims 1 and 2, **characterised by** the fact that the element (18) has an cylindrical external shape.

4. Base plate according to one of claims 1 to 3, **characterised by** the fact that it comprises an element (22) for centring and locking a work with respect to an opening formed in the work to be immobilised.

5. Fixing base plate according to one of claims 1 to 4, **characterised by** the fact that it comprises a means for guiding the end of a nail-guide (40) or a staple-guide.

6. Base plate according to claim 5, **characterised by** the fact that the said guiding means forms a collar (14).

7. Base plate according to claim 6, **characterised by** the fact that the element (18) projects at the collar (14).

8. Device for fixing a work onto a support, comprising a base plate according to one of claims 1 to 7, **characterised by** the fact that it also comprises a staple (30) of which the arms are bent and of which the end is introduced at the entry of the said two guide ramps (4, 6).

9. Fixing device according to claim 8, of which the staple comprises two convergent parts (341, 361) and two divergent parts (342, 362) having a narrow part with a smaller distance between the two arms (34, 36), **characterised by** the fact that the outer diameter of the external edge of the base plate element (18), which the arms (34, 36) of the staple are intented to touch as they advance, is greater than the smallest distance between the two arms (34, 36) of the staple (30) so as to force the opening of the staple arms (30) when the staple moves towards the base plate support.

10. Device for fixing a work onto a support, comprising a base plate according to claim 2 and possibly one of claims 3 to 7, **characterised by** the fact that it also includes a nail introduced into the said channel (8).

11. Method for fixing a work onto a support using a fixing device according to one of claims 8 to 10, of which the base plate comprises the characteristics of claim 6, its collar (14) providing a space with a bottom (16), the method using an automatic setting device provided with a guide (40) for a nail or a staple, the guide (40) comprising a central channel (42) enabling to guide a nail and two internal grooves (44, 45) along the channel (42) enabling to receive and guide a staple, in which method the guide (40) is mounted onto an automatic tool, the staple (30) is introduced into the grooves (44, 45) of the guide (40) until the latter gets inside the collar and comes in abutment against the bottom (16) of the space provided by the collar (14), the base plate is pressed against the support and the staple (30) is driven against the support.
